# EUROPÄISCHE PATENTANMELDUNG

(11) **EP 0 945 317 A2**
(43) Veröffentlichungstag der Anmeldung: **29.09.1999**
(21) Anmeldenummer: 99105613.6
(22) Anmeldetag: 19.03.1999
(51) Int. Cl.: B60R 25/00, E05B 49/00

(54) **Kommunikationseinrichtung für ein Fahrzeug**

(30) Priorität: 21.03.1998 DE 19812552
(71) Anmelder: Kirmes, Gisela, 01099 Dresden (DE); Meyer-Götz, Heinrich, 01468 Reichenberg (DE)
(72) Erfinder: Kirmes, Gisela, 01099 Dresden (DE); Meyer-Götz, Heinrich, 01468 Reichenberg (DE)
(74) Vertreter: Dreiss, Fuhlendorf, Steimle & Becker, Patentanwälte

(57) **Zusammenfassung**

Eine Kommunikatinseinrichtung (11) für ein Fahrzeug ist mit einem Mikrophon (23) und einem Lautsprecher (24), welche sich im Innenraum des Fahrzeugs oder dergleichen befinden, mit jeweils mindestens einem außenliegenden Mikrophon (13) und Lautsprecher (14), mit einer zentralen elektronischen Schaltungseinheit (15), an die die Mikrophone (13, 23) und die Lautsprecher (14, 24) angeschlossen sind, sowie mit einer einen Ein/Ausschalter (31) aufweisenden Schaltvorrichtung (26) zur Bedienung der Kommunikationseinrichtung (11), versehen. Um eine Kommunikationseinrichtung zu schaffen, die mit Ihrem Einschalten für eine erhöhte Sicherheit im Fahrzeug sorgt, ist vorgesehen, dass die Schaltungseinheit (15) mit einer Zentralverriegelungsanordnung (42) für Türen, Deckel, Klappen und/oder dergleichen und/oder mit einer Verschlußanordnung (44) für Schiebedächer und/oder mit einer Fensterheberanordnung (40) mittels des Ein/Ausschalters (31) der Schaltvorrichtung (26) ansteuerbar verbunden ist.

## Beschreibung

Die vorliegende Erfindung bezieht sich auf eine Kommunkationseinrichtung, insbesondere eine Wechselsprechanlage, für ein Fahrzeug, ein Kleingebäude oder dergleichen, nach dem Oberbegriff des Anspruchs 1.

Eine derartige Kommunikationseinrichtung für Fahrzeuge ist aus der EP 0 636 071 B1 bekannt geworden. Dabei ist die Kommunikation mit außen befindlichen Personen möglich, was beispielsweise bei Lastkraftwagen für den Rangierbetrieb von besonderem Vorteil ist. Auch bei Personenkraftwagen ergibt sich hier eine einfache Möglichkeit zur Kommunikation mit Außenstehenden, insbesondere dann, wenn der Fahrer mit einer Person auf dem beifahrerseitigen Gehweg in Sprechkontakt treten will.

Derartige Kommunikationseinrichtungen vermitteln aber auch ein gewisses Gefühl an Sicherheit beim Fahrer bzw. einer Fahrerin. Dieses Sicherheitsgefühl ist jedoch nur relativ, da die Begegnung mit fremden Personen in der Dunkelheit oder in einsamen Gegenden deshalb nicht unproblematisch ist, weil der Zugang zum Fahrzeug in unerwarterter Weise dennoch möglich ist. Es besteht zwar für den Fahrer oder die Fahrerin die Möglichkeit, die Tür bzw. Türen durch Drücken des Türknopfes zu verriegeln, um ein Öffnen von Außen zu verhindern, jedoch ist dies mit einem zusätzlichen ungewohnten Handgriff verbunden und umständlich. Außerdem sind dabei oft Fenster und/oder Schiebedächer ganz oder teilweise geöffnet.

Aufgabe der vorliegenden Erfindung ist es, eine Kommunikationseinrichtung der eingangs genannten Art zu schaffen, die für eine erhöhte Sicherheit im Fahrzeug bzw. in einem Kleingebäude sorgt.

Zur Lösung dieser Aufgabe sind bei einer Kommunikationseinrichtung der eingangs genannten Art die im Anspruch 1 angegebenen Merkmale gelöst.

Durch die erfindungsgemäßen Maßnahmen ist erreicht, dass mit dem Einschalten der Kommunikationseinrichtung ein elektrisches Signal ausgelöst wird, welches sämtliche sicherheitsrelevanten Öffnungen am Fahrzeug bzw. Kleingebäude verschließt bzw. verriegelt. Dadurch ergibt sich für die Fahrerin oder den Fahrer eine wesentlich höhere Sicherheit dahingehend, beim Kontakt mit außenstehenden Personen von diesen weder unmittelbar körperlich noch über sonstige Mittel, wie in den Innenraum eingesprühtes Reizgas oder dergleichen, angegriffen zu werden. Dennoch ist eine bequeme Kommunikation nach wie vor möglich.

Gemäß einem bevorzugten Ausführungsbeispiel vorliegender Erfindung sind die Merkmale nach Anspruch 2 vorgesehen. Hierdurch ist erreicht, dass während des Zeitraums, in welchem die Kommunikationseinrichtung eingeschaltet ist, es auch von weiteren Fahrzeuginsaßen nicht möglich ist, einzelne sicherheitsrelevante verschlossene Öffnungen wieder, sei es auch nur teilweise, zu öffnen. Dies erhöht weiter den Sicherheitsaspekt und verhindert unbesonnene Handlungen der Fahrzeuginsaßen.

Der die erhöhte Sicherheit auslösende Ein/Ausschalter kann gemäß den Merkmalen eines oder mehrerer der Ansprüche 3 bis 7 in unterschiedlicher Weise ausgebildet sein.

Mit dem Merkmal gemäß Anspruch 8 und/oder 9 ist eine einfache Nachrüstung beispielsweise eines Kraftfahrzeugs gegeben.

Weitere Einzelheiten der Erfindung sind auf folgender Beschreibung zu entnehmen, in der die Erfindung anhand des in der Zeichnung dargestellten Ausführungsbeispieles näher beschrieben und erläutert ist. Es zeigen:
- Figur 1: eine perspektivische Wiedergabe eines Fahrzeugs zur Darstellung der außen- und innenliegenden Bauteile einer Sicherheits-Kommunikationseinrichtung gemäß vorliegender Erfindung und
- Figur 2: in schematischer Darstellung ein Blockschaltbild der Sicherheits-Kommunikationseinrichtung gemäß vorliegender Erfindung.

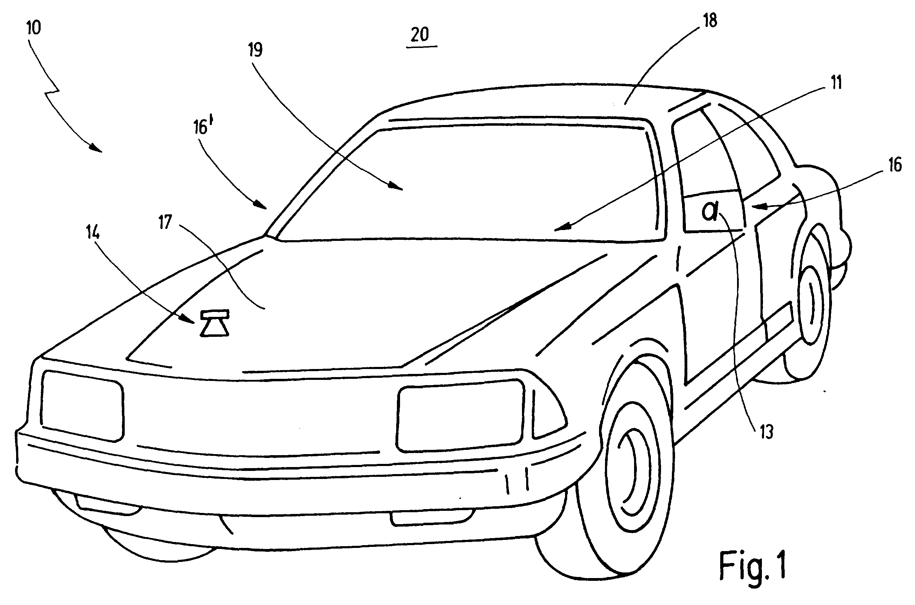

In Figur 1 ist insgesamt ein lediglich beispielhaft wiedergegebenes Fahrzeug 10 dargestellt, das mit der erfindungsgemäßen Sicherheits-Kommunikationseinrichtung 11 versehen ist, die in Form einer Kombination aus Wechselsprechanlage und sicherheitsrelevanten Kraftfahrzeugverschlußanordnungen die Kommunikation zwischen dem Fahrzeuginneren 19 und dem Fahrzeugaußenbereich 20 bei vollständig verschloßenem und von außen nicht zu öffnendem Fahrzeug 10 ermöglichen soll. Als Fahrzeuge kommen hierbei nicht nur Kraftfahrzeuge, wie Personenkraftwagen, Wohnmobile, Lastkraftwagen, Busse und dergleichen in Betracht, sondern auch Wohnanhänger und dgl. Außerdem kann die Vorrichtung 11 auch für Kleingebäude, wie Wochenend-Ferienhäuser und dergleichen Verwendung finden.

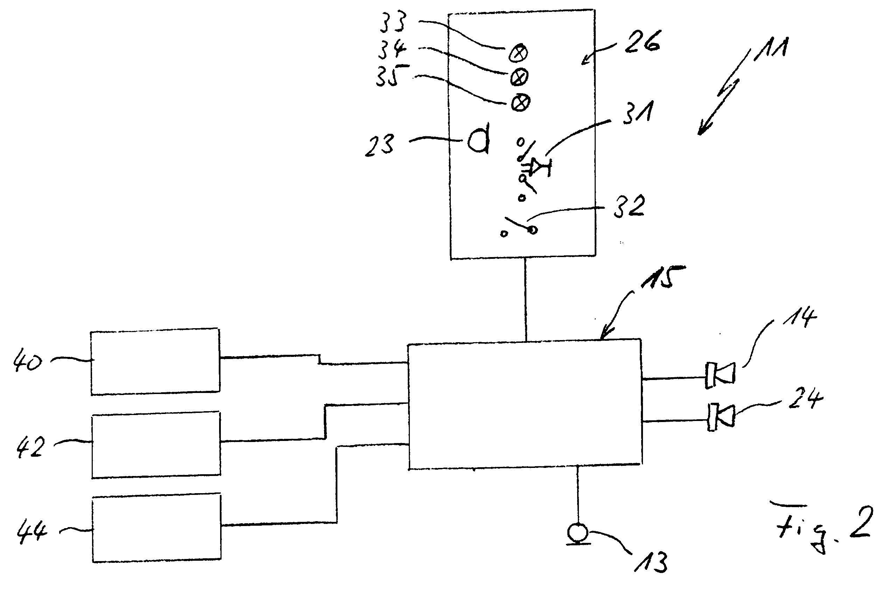

Die Sicherheits-Kommunikationseinrichtung 11 besitzt, wie auch der Figur 2 zu entnehmen ist, im Fahrzeug 10 angeordnete, d. h. innenliegende Bauteile 23 und 24 in Form mindestens eines Lautsprechers 24 und mindestens eines Mikrophons 23 sowie außen am Fahrzeug 10 angeordnete, d. h. außenliegende Bauteile 13 und 14 in Form mindestens eines Mikrophons 13 und mindestens eines Lautsprechers 14. Gemäß Figur 1 ist das außenliegenden Mikrophon 13 beispielsweise in dem linken und/oder rechten Außenspiegel 16, 16' eingebaut, während der außenliegende Lautsprecher 14 unter dem Motorhaube 17 angeordnet ist. Es versteht sich, daß der außenliegende Lautsprecher 14 auch in einem Taxischild auf dem Fahrzeugdach 18 oder auch im Außenspiegel 16 bzw. 16' angeordnet sein kann.

Statt der oder zusätzlichen zu den in Figur 1 beschriebenen Anordnung von außenliegendem Mikrophon und des außenliegendem Lautsprecher können solche außenliegenden Bauteile auch rückwärtig am Heck des Fahrzeugs, beispielsweise insbesondere an Kombifahrzeugen, Lastkraftwagen, Bussen oder dergleichen langen für das Rangieren unübersichtlichen Fahrzeugen angeordnet sein, um beim Rangieren des Fahrzeugs eine Kommunikation zwischen dem Fahrer und einem Einweiser oder auch nur das hörende Überwachen des nicht einsehbaren Bereichs sicherzustellen.

Der oder die innenliegenden Lautsprecher 24 können in bei Autoradios üblicher Weise im Innenraum 19 des Fahrzeugs 10 angeordnet sein. Gemäß einem Ausführungsbeispiel ist bzw. sind der oder die Innenlautsprecher 24 durch die Lautsprecher des Autoradios gebildet. Das Innenmikrofon 23 ist in Sprechweite des Fahrers im Innenraum 19 des Fahrzeugs 10, beispielsweise im Amaturenbrett eingebaut. Desweiteren ist im Innenraum 19 des Fahrzeugs 10 in Reich- und Sichtweite des Fahrers eine Steuer- bzw. Schaltvorrichtung 26 eingebaut. Die bspw. am Amaturenbrett angeordnete Schaltvorrichtung 26 besitzt einen Ein/Ausschalter 31, beispielsweise in Form eines Wippentasters mit mittiger Nullstellung, einen Umschalter 32 zum Umschalten der Kommunikation auf die rückwärtige Station, ein optisches Signal 33 für den eingeschalteten Zustand, ein optisches Signal 34 für das Sprechen nach Außen und ein optisches Signal 35 für die eingeschaltete rückwärtige Station. Außerdem ist an dieser Steuer- bzw. Schaltvorrichtung 26 das innenliegende Mikrophon 23 angeordnet. Diese Schaltvorrichtung 26 kann anstatt ein seperates Bauteil am Amaturenbrett zu sein, in das Bedienteil des Autoradios integriert sein.

Gemäß Figur 2 besitzt die Sicherheits-Kommunikationseinrichtung 11 ein Zentralgerät bzw. eine zentrale Schaltungseinheit 15, die sowohl mit den innen- und außenliegenden Mikrophonen 13, 23 und den innen- und außenliegenden Lautsprechern 14, 24 als auch mit der Steuer- bzw. Schaltvorrichtung 26 verbunden ist. Desweiteren ist dieses Zentralgerät 15 mit einer Fensterheberanordnung 40 und/oder mit einer Zentralverriegelungsanordnung 42 und/oder mit einer Schiebedach-Verschlußanordnung 44 des Fahrzeugs 10 wirkungsmäßig verbunden, entweder direkt oder über ein oder mehrere KFZ-Relais. Es versteht sich, dass die Sicherheits-Kommunikationseinrichtung 11 speisespannungsmäßig mit der Kraftfahrzeugbatterie oder einer Batterie eines sonstigen Fahrzeugs oder des Kleingebäudes verbunden ist.

Die Funktionsweise der Sicherheits-Kommunikationseinrichtung 11 ist folgende:
Wird die Sicherheits-Kommunikationseinrichtung 11 mit Hilfe des Ein/Ausschalters 31, in welchem das innenliegende Mikrophon 23 integriert sein kann, eingeschaltet, werden Mikrophon 23 integriert sein kann, eingeschaltet, werden mit der Möglichkeit der Kommunikation zwischen Innenraum 19 des Fahrzeugs 10 und außen sämtliche sicherheitsrelevanten Öffnungen nicht nur verschlossen, sondern auch für die Zeit der Kommunikation gegen ein Öffnen von außen oder innen verriegelt. So werden beispielsweise die Zentralverriegelungsanordnung 44 zum Verschließen der Türen, Klappen und dergleichen als auch, soweit relevant, das Schiebedach verschlossen und die Fensterheberanordnung 40 betätigt. Mit diesem Verschließen geht ein Verriegeln in der Weise einher, dass die Fensterheberanordnung, so lange wie der Ein/Ausschalter 31 in EIN-Stellung ist, von innen nicht mehr betätig werden kann. Entsprechendes gilt für die Zentralverriegelungsanordnung 42 und die Schiebedach-Verschlußanordnung 44. Erst wenn die Kommunikation mit dem Außenbereich 20 beendet ist, d. h. wenn der Ein/Ausschalter 31 wieder in AUS-Stellung ist, bzw. durch den Taster der AUS-Impuls ausgelöst wurde, wird die Zentralverriegelungsanordnung 42 zum Entriegeln der Türen wieder betätigt und es kann die Fensterheberanordnung 40 ebenso wie die Schiebedachverschlußanordnung 44 wieder betätigt werden.

Gemäß nicht dargestellten Ausführungsbeispielen kann der Ein/Ausschalter 31 durch eine Fernbedienung oder durch eine im Innenraum des Fahrzeugs eingebaute Hör-Sprech-Steuergarnitur, bei der mit dem Abnehmen die Kommunikation und die sicherheitsrelevanten Operationen erreicht werden, gebildet sein. Der Ein/Ausschalter 31 kann auch parallel zu einem zuschaltbaren außenliegenden Bewegungsmelder vorgesehen sein.

## Patentansprüche

1. Kommunikatinseinrichtung (11) insbesondere Wechselsprechanlage, für ein Fahrzeug, ein Kleingebäude oder dergleichen, mit einem Mikrophon (23) und einem Lautsprecher (24), welche sich im Innenraum des Fahrzeugs oder dergleichen befinden, mit jeweils mindestens einem außenliegenden Mikrophon (13) und Lautsprecher (14), mit einer zentralen elektronischen Schaltungseinheit (15), an die die Mikrophone (13, 23) und die Lautsprecher (14, 24) angeschlossen sind, sowie mit einer einen Ein/Ausschalter (31) aufweisenden Schaltvorrichtung (26) zur Bedienung der Kommunikationseinrichtung (11), dadurch gekennzeichnet, dass die Schaltungseinheit (15) mit einer Zentralverriegelungsanordnung (42) für Türen, Deckel, Klappen und/oder dergleichen und/oder mit einer Verschlußanordnung (44) für Schiebedächer und/oder mit einer Fensterheberanordnung (40) mittels des Ein/Ausschalters (31) der Schaltvorrichtung (26) ansteuerbar verbunden ist.

2. Kommunikationseinrichtung nach Anspruch 1, dadurch gekennzeichnet, dass der Ein/Ausschalter (31) die Funktion eines die Einzelansteuerung von Zentralverriegelungsanordnung (44), Verschlußanordnung (44) und/oder Fensterheberanordnung (40) sperrenden Schalters besitzt.

3. Kommunikationseinrichtung nach Anspruch 1 oder 2, dadurch gekennzeichnet, dass der Ein/Ausschalter (31) durch einen Taster gebildet ist.

4. Kommunikationseinrichtung nach Anspruch 3, dadurch gekennzeichnet, dass der Taster (31) im Amaturenbrett intergriert ist.

5. Kommunikationseinrichtung nach Anspruch 1 oder 2, dadurch gekennzeichnet, dass der Ein/Ausschalter (31) Teil einer abhebbaren Hör-Sprech-Steuergarnitur ist.

6. Kommunikationseinrichtung nach Anspruch 1 oder 2, dadurch gekennzeichnet, dass parallel zum Ein/Ausschalter (31) ein zuschaltbarer außenliegender Bewegungsmelders vorgesehen ist.

7. Kommunikationseinrichtung nach mindestens einem der Ansprüche 1 bis 4, dadurch gekennzeichnet, dass das innenliegende Mikrophon (23) in den Ein/Ausschalter (31) integriert ist.

8. Kommunikationseinrichtung nach mindestens einem der vorhergehenden Ansprüche, dadurch gekennzeichnet, dass die Schaltungseinheit (15) und/oder die Schaltvorrichtung (26) in ein Autoradio integriert ist bzw. sind und/oder der oder die innenliegenden Lautsprecher (24) durch den oder die Lautsprecher des Autoradios gebildet sind.

9. Kommunikationseinrichtung nach Anspruch 8, dadurch gekennzeichnet, dass das innenliegende Mikrophon (23) in bzw. hinter das Bedienteil des Autoradios integriert ist.
